# EUROPEAN PATENT APPLICATION

(11) **EP 0 916 855 A1**
(43) Date of publication of application: **19.05.1999**
(21) Application number: 98203700.4
(22) Date of filing: 03.11.1998
(51) Int. Cl.: F16B 17/00

(54) **Tube connection**

(30) Priority: 12.11.1997 NL 1007535
(71) Applicant: Heras Holding Company B.V., NL-5688 JE Oirschot (NL)
(72) Inventor: Behr, Antonius Alfonsus Maria, 5663 JW Geldrop (NL)
(74) Representative: Hoorweg, Petrus Nicolaas

(57) **Abstract**

Connection of two tubular elements, such as a rail (3) and an upright (4) of a fence assembly or gate, which are placed onto each other at an angle, wherein the one element is placed in a suitable hole in the side wall of the other element and is connected to the other element by bulging of the wall of the one element, and wherein a strip (9) extending to the expanded part is provided on the edge of the hole in order to reduce the surface tensions between the edge of the hole and the one element.

## Description

The invention relates to a connection of two tubular elements, such as a rail and an upright of a fence assembly or gate, which are placed onto each other at an angle, wherein the one element is placed in a suitable hole in the side wall of the other element and is connected to the other element by bulging of the wall of the one element.

The connecting of uprights and rails for making a framework, in particular for making frameworks for fence assemblies, is frequently done by welding, but also by cold deformation of the part of the upright which protrudes through the rail such that the upright clamps fixedly in the rail.

For this latter method of connection a suitable hole is first made in the rail. An upright is then inserted into the hole, whereafter a pressure body is placed in the hollow rail which expands the upright from inside. The upright is hereby clamped fixedly in the hole.

A drawback of this connection is that at the position of the sharp edge of the hole large surface tensions occur, whereby the protective layer on the upright is damaged and the upright will still begin to rust.

The invention has for its object to obviate the above stated drawback, wherein the surface tensions round the hole are decreased such that the protective layer is not damaged, even after a long period of time.

The connection according to the invention is distinguished in that a strip extending to the expanded part is provided on the edge of the hole in order to reduce the surface tensions between the edge of the hole and the one element.

The strip fits round the bulge so that the pressure forces are absorbed by the whole surface of the strip instead of by the edge of the hole. The surface tensions are hereby low and the protective layer is not damaged.

According to a preferred embodiment according to the invention the strip forms a collar on the edge of the hole. Such a hole can be made in simple manner by means of flow drilling. During this flow drilling a collar is created on the edge of the hole simultaneously with making of the hole.

In another embodiment according to the invention the collar is formed by a plastic sleeve. This sleeve can be easily pressed into an already present hole, whereafter an upright is placed in the sleeve and expanded locally. The sleeve absorbs the stresses and transmits these to the edge of the hole. Once again, the pressure on the protective layer of the upright is hereby decreased, whereby the layer will not be damaged.

In a further embodiment according to the invention a polygonal tubular element is placed into a suitable polygonal hole of the other element. The hole is provided with a lip on only two, preferably mutually opposite sides of the hole. In the polygonal tubular element bulges are arranged only on sides of the tube wall corresponding with the lips.

Although the bulges and the strip will in most cases be arranged inside the other tubular element, they can, for instance because of the design, also be arranged on the outside.

Fig. 1 shows a perspective view of a fence assembly in which the tube connection according to the invention is applied.

Fig. 2 shows a perspective view with an enlarged part of a first embodiment of the tube connection according to the invention.

Fig. 3 shows a perspective view with an enlarged part of a second embodiment according to the invention.

Fig. 4 shows a perspective view with an enlarged part of a third embodiment according to the invention.

Fig. 5 shows a view with partly cross-sectional parts of a tool for making a tube connection according to the invention.

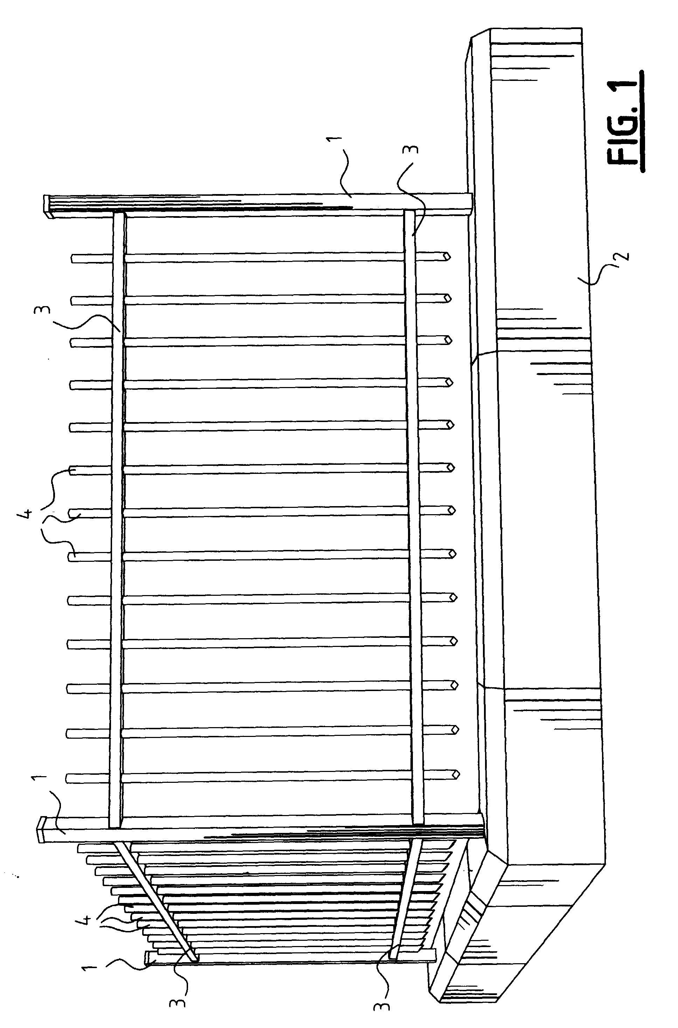

Fig. 1 shows a fence assembly consisting of vertical beams 1 which are for instance set into a foundation 2. Between the vertical beams extend horizontal rails 3, through which pass a large number of hexagonal vertical uprights 4. These uprights 4 are connected to rails 3 by means of a tube connection according to the invention.

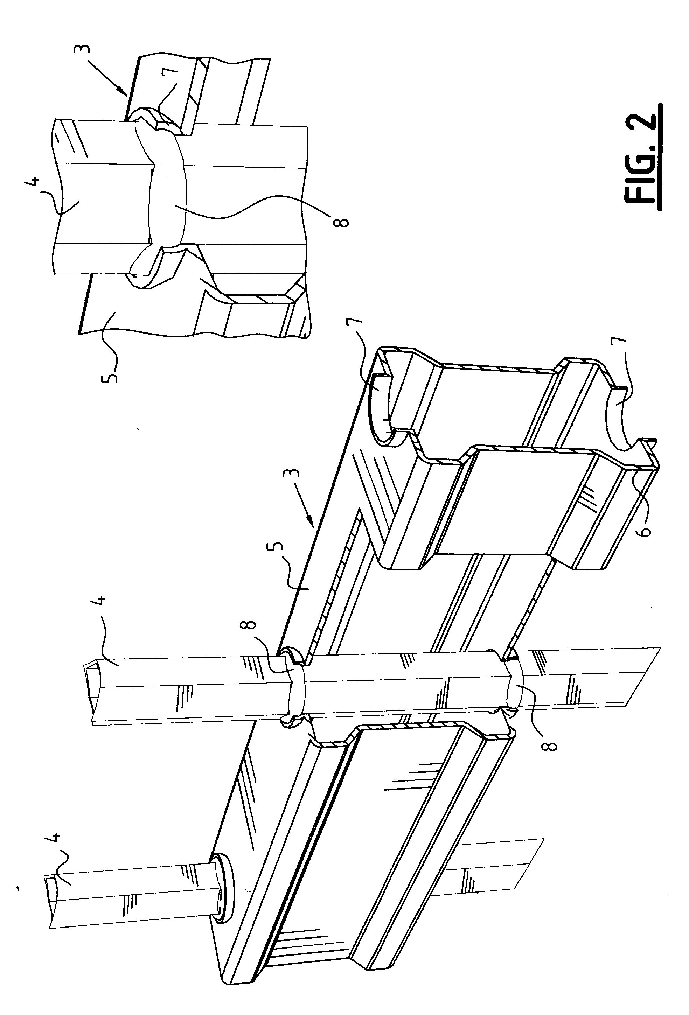

A preferred embodiment of a tube connection according to the invention is shown in fig. 2. Rail 3 comprises for each upright 4 a round hole formed in the upper surface 5 of rail 3 and, in the line thereof, a round hole formed in the bottom surface 6 of the rail. A collar 7 is arranged on the edge of both holes on the outside of rail 3. This can take place in efficient manner by flow drilling. During the drilling a collar is herein formed on the edge of the hole, as required on the top or bottom side.

Uprights 4 pass through the holes in rail 3. These uprights 4 are cold-deformed locally at the position of the collars 7. This formed bulge clamps the upright 4 firmly in place in rail 3.

Collar 7 is deformed during forming of the bulge 8 such that the collar lies against the bulge and thus considerably reduces the surface tension between upright 4 and the hole in rail 3. The protective surface layer on the upright is hereby not damaged by the hole.

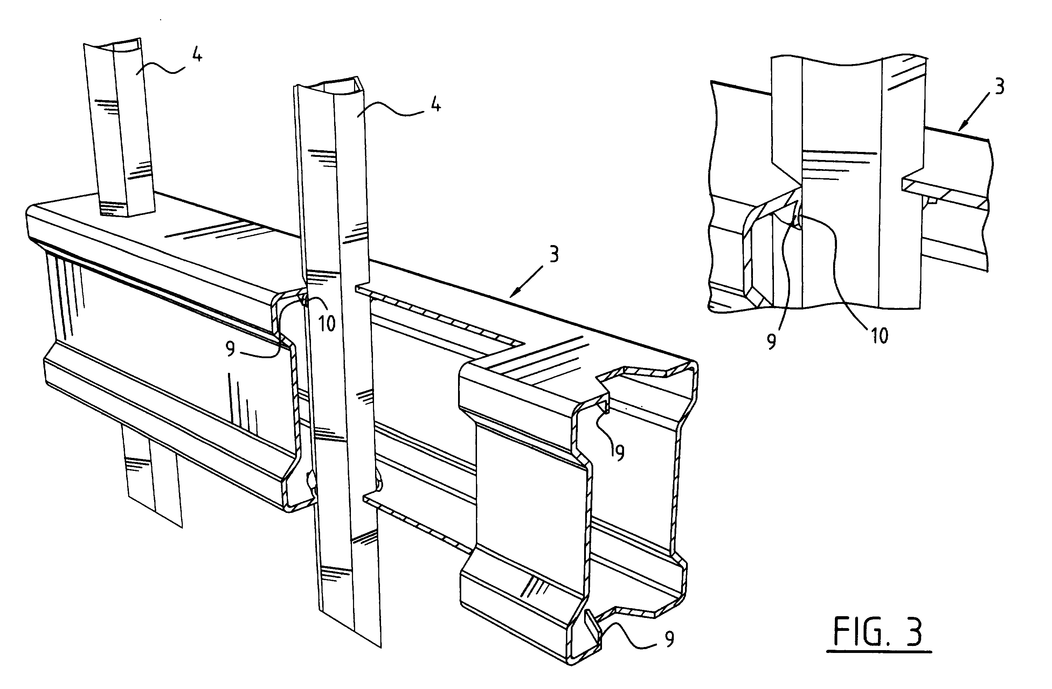

A second embodiment according to the invention is shown in fig. 3. Shown once again here is a rail 3 in which are formed holes which correspond in shape with the cross-section of upright 4. In this example the holes and uprights 4 are hexagonal.

Two lip-shaped strips are arranged on only two mutually opposite sides of a hole and bulges 10 are arranged on the sides of upright 4 corresponding with these lip-shaped strips 9. The lip-shaped strips 9 herein lie against the respective bulges 10 and clamp the upright 4 fixedly in rail 3 such that this upright 4 cannot shift axially relative to rail 3. Rotation of upright 4 is herein limited by the hexagonal form of the hole and the upright 4.

The lip-shaped strips ensure that the surface tension between the edge of the hole and the upright 4 at the position of the bulge remains limited and the upright is not therefore damaged.

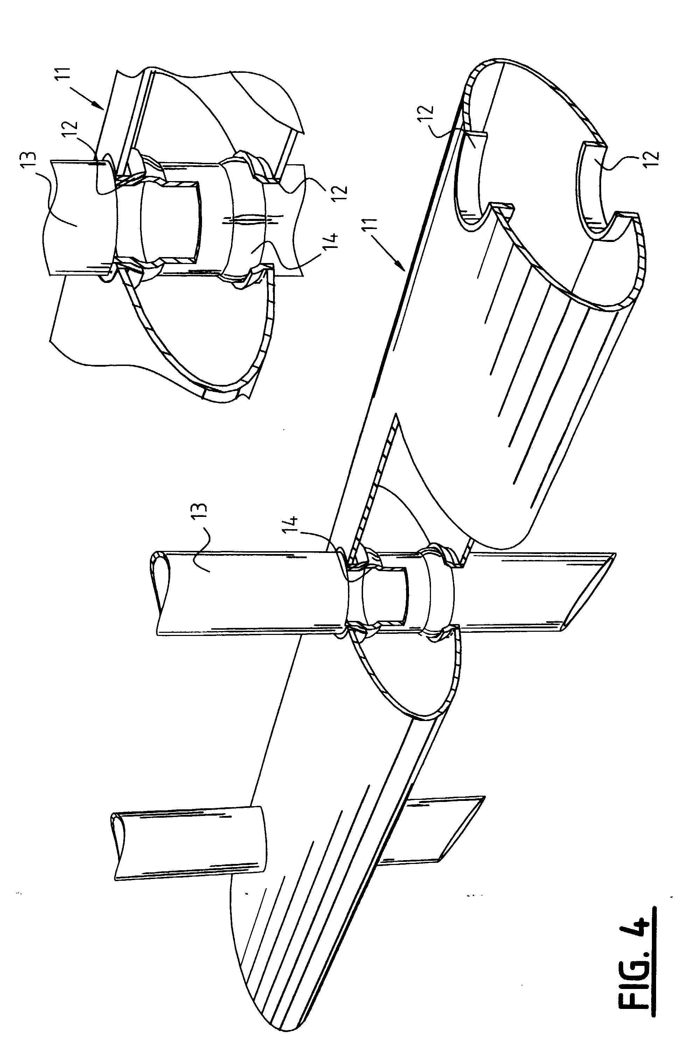

Fig. 4 shows a third embodiment of a connection according to the invention. Shown herein is a rail 11 of oval-shaped cross-section in which holes are formed mutually in line. Arranged in these holes are sleeves 12 which form the surface tension-reducing strips. Placed into these holes are uprights 13 which, inside rail 11, are provided with bulges 14 which clamp the upright 13 fixedly in rail 11.

Sleeves 12 are deformed by arranging of the bulges 14 such that they lie wholly against upright 13. The surface tension is hereby reduced once again. The sleeves 12 are preferably made of a non-oxidizing material such as plastic.

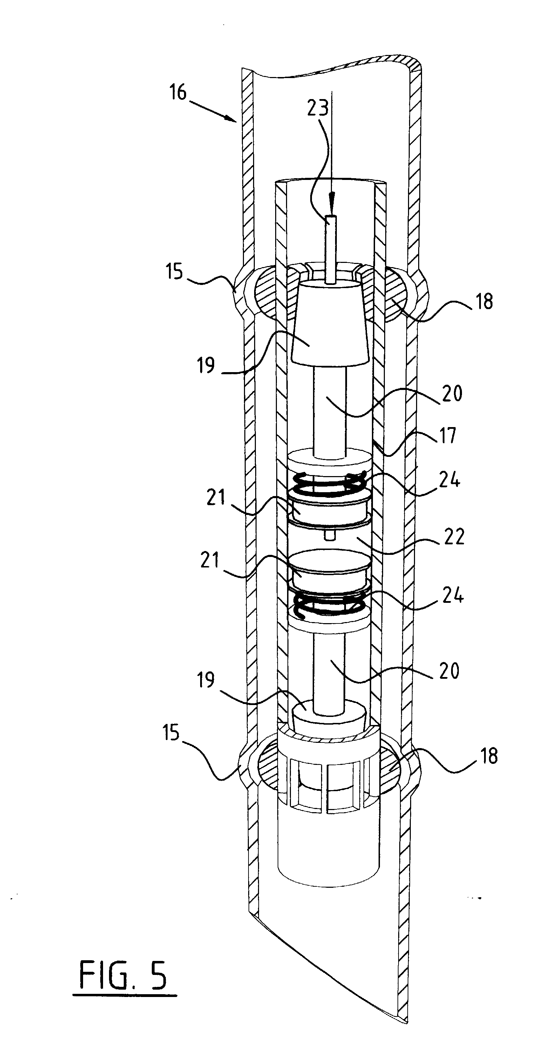

The bulges can be arranged in any suitable manner. A tool for simultaneously arranging two bulges 15 in one tube 16 is shown in fig. 5.

This tool comprises a tubular housing 17 which can be inserted in tube 16. Provided round the housing 17 at the location of the desired bulges are two segmented rings 18 protruding partially into the housing. The segmented rings each have a conical surface on the inside.

The segmented rings 18 are expanded as required via this conical surface with a cone 19. These cones 19 are connected via connecting rods 20 to pistons 21 sealing against the inner wall of the housing.

The space 22 between these two pistons 21 is provided via the channel 23 with for instance hydraulic oil under pressure. The pistons 21 hereby drive the cones 19 into the rings 18, whereby these latter expand and arrange the bulges 15 in tube 16. The pistons are returned to their starting position by the spiral springs 24.

It is self-evident that according to the invention the tubes for connection can be of any desired cross-section and that the surface tension-reducing strips on the edge of the holes can be arranged both on the inside and outside of the tube. In addition, the holes can have any desired shape.

## Claims

1. Connection of two tubular elements, such as a rail and an upright of a fence assembly or gate, which are placed onto each other at an angle, wherein the one element is placed in a suitable hole in the side wall of the other element and is connected to the other element by bulging of the wall of the one element, **characterized in that** a strip extending to the expanded part is provided on the edge of the hole in order to reduce the surface tensions between the edge of the hole and the one element.

2. Connection as claimed in claim 1, **characterized in that** the strip forms a collar on the edge of the hole.

3. Connection as claimed in claim 1, **characterized in that** the strip forms at least two lips on the edge of the hole.

4. Connection as claimed in claim 3, **characterized in that** the parts of the tube wall of the one element lying in line with the lips are expanded.

5. Connection as claimed in claim 1, **characterized in that** the strip is formed by a sleeve arranged in the hole.

6. Connection as claimed in claim 5, **characterized in that** the sleeve is made of plastic.

7. Connection as claimed in any of the foregoing claims, **characterized in that** the hole is polygonal.
